# EUROPÄISCHE PATENTANMELDUNG

(11) **EP 1 092 952 A1**
(43) Veröffentlichungstag der Anmeldung: **18.04.2001**
(21) Anmeldenummer: 00120431.2
(22) Anmeldetag: 19.09.2000
(51) Int. Cl.: G01C 21/36

(54) **Navigationssystem mit automatischem Datenträgerwechsel**

(30) Priorität: 05.10.1999 DE 19947790
(71) Anmelder: Mannesmann VDO Aktiengesellschaft, 60388 Frankfurt am Main (DE)
(72) Erfinder: Greif, Thomas, 53229 Bonn (DE)
(74) Vertreter: Klein, Thomas, Dipl.-Ing. (FH)

(57) **Zusammenfassung**

Es wird ein verbessertes Navigationssystem mit einer vereinfachten Bedienung vorgeschlagen. Datenträger mit Landkartendaten enthalten üblicherweise Landkartendaten zu einem einzigen Land. Bei Fahrten über Landesgrenzen hinweg muß daher der Datenträger manuell gewechselt werden. Erfindungsgemäß ist daher nunmehr vorgesehen, daß das Navigationssystem ein Lesegerät (5) enthält, das zur Aufnahme von mehreren wechselbaren Datenträgern sowie zum wahlweisen Auslesen von Daten aus einem der Datenträger ausgebildet ist, und das Navigationssystem Mittel zur Auswahl eines Datenträgers abhängig von der Fahrzeugposition enthält. Bei Überschreiten einer Landesgrenze wird daher das erfindungsgemäße Navigationssystem selbständig einen Wechsel des Datenträgers vornehmen, so daß eine lückenlose Zielführung ohne Zutun des Benutzers gewährleistet ist.

## Beschreibung

Die Erfindung betrifft ein Navigationssystem eines Kraftfahrzeugs mit einer Recheneinheit zur Berechnung einer Route zwischen einem Start- und einem Zielort, einem mit der Recheneinheit verbundenem Lesegerät zum Auslesen von Landkartendaten aus einem Datenträger, Mitteln zur Bestimmung der Fahrzeugposition, einer mit der Recheneinheit verbundenen Eingabeeinheit und einer mit der Recheneinheit verbundenen Ausgabeeinheit.

Derartige Navigationssysteme sind durch den Einsatz in Kraftfahrzeugen bekannt. Die zur Routenberechnung erforderlichen Landkartendaten sind auf einem wechselbaren Datenträger abgespeichert, bei dem es sich in der Regel um eine CD-ROM handelt. Die auf der CD-ROM abgespeicherten Landkartendaten decken einen bestimmten geographischen Bereich ab, der zumeist durch die Grenzen eines Landes begrenzt ist. Bei Fahrten über die Landesgrenzen hinaus, muß daher bei Überschreiten der Landesgrenze die CD-ROM gewechselt werden und die CD-ROM des Landes, in das das Kraftfahrzeug gerade hinein fährt, eingelegt werden. Zusätzlich muß der Fahrer dann den neuen Zielort eingeben, so daß die Routenberechnung erfolgen kann. Diese Vorgehensweise wird häufig als unbefriedigend angesehen.

Aufgabe der Erfindung ist es daher, ein Navigationssystem anzugeben, das eine vereinfachte Bedienung gewährleistet, auch bei Verlassen des geographischen Bereichs, dessen Landkartendaten auf der aktuell eingelegten CD-ROM abgespeichert sind.

Die Aufgabe wird dadurch gelöst, daß das Lesegerät zur Aufnahme von mehreren wechselbaren Datenträgern sowie zum wahlweisen Auslesen von Daten aus einem der Datenträger ausgebildet ist und das Navigationssystem Mittel zur Auswahl eines Datenträgers abhängig von der Fahrzeugposition enthält. Das erfindungsgemäße Navigationssystem weist somit zunächst ein Lesegerät auf, in das mehrere Datenträger eingelegt werden können. Im Falle von CD-ROMs als Datenträger ist das Lesegerät somit als CD-Wechsler ausgebildet. Dies bedeutet, daß mehrere CD-ROMs in den CD-Wechsler eingelegt und Daten aus einer dieser CD-ROMs ausgelesen werden können. Zusätzlich ist vorgesehen, daß das erfindungsgemäße Navigationssystem Mittel zur Auswahl eines Datenträgers abhängig von der Fahrzeugposition enthält. Die Fahrzeugposition wird bei Navigationssystemen ständig ermittelt, um die benötigten Zielführungsinformationen zum richtigen Zeitpunkt ausgeben zu können. Die Fahrzeugposition kann daher zusätzlich zur Abfrage benutzt werden, ob der der Fahrzeugposition entsprechende geographische Ort auf einer der vorhandenen und gegebenenfalls auf welcher CD-ROM vorhanden ist. Somit kann automatisch diejenige CD-ROM ausgewählt werden, die die geographischen Daten der momentanen Position enthält.

Bei Fahrten in zwei verschiedenen Ländern, deren Landkartendaten auf zwei verschiedenen CD-ROMs abgespeichert sind, kann beispielsweise der Start- und Zielort sowie der Ort des Grenzübertritts als Zwischenziel in das Navigationssystem eingegeben werden. Die Routenplanung erfolgt dann zunächst zwischen dem Startort und dem Zwischenziel mit der ersten CD-ROM, die den Startort enthält. Bei Erreichen des Zwischenziels wird die CD-ROM gewechselt und es erfolgt eine Routenplanung vom Zwischenziel zum Zielort. Die Ansteuerung des CD-Wechslers erfolgt dabei durch die Recheneinheit, in der ein entsprechendes Computerprogramm abläuft.

In einer alternativen Ausführungsform ist vorgesehen, daß das Navigationssystem zur Routenberechnung über mindestens 2 Datenbanken ausgelegt ist, die auf verschiedenen Datenträgem abgelegt sind. Hierbei sind von dem Fahrer lediglich der Start- und der Zielort einzugeben und die Routenplanung erfolgt unter automatischer Auswahl eines Zwischenziels.

Ein Lesegerät das mehrere Datenträger aufnehmen kann, kann unter Umständen aus Platzgründen nicht in unmittelbarer Nähe der Recheneinheit angeordnet werden. Daher sind beim Verbinden der Recheneinheit mit dem Lesegerät im Kraftfahrzeug zum Teil längere Wege per Kabel zu überbrücken. In einer besonderen Ausführungsform ist daher vorgesehen, daß die Verbindung zwischen dem Lesegerät und der Recheneinheit kabellos, insbesondere über eine Funkschnittstelle erfolgt.

Die Ausgabe der Zielführungsinformationen kann sowohl über eine akustische als auch über eine optische Ausgabeeinheit erfolgen. Die Eingabe bspw. des Zielortes kann über eine Tastatur erfolgen. Besonders bevorzugt wird jedoch, ggf. zusätzlich, eine Spracheingabeeinheit, da hierbei auch während der Fahrt noch eine Eingabe erfolgen kann.

Um auch im Falle von Verkehrsbehinderungen auf der ursprünglich geplanten Route dem Fahrer Alternativrouten anbieten zu können, ist vorgesehen, daß das Navigationssystem mit einem Gerät zum Empfang von Verkehrsinformationen verbunden ist oder ein solches enthält und die Verkehrsinformationen bei der Zielführung berücksichtigt werden. Bei dem Gerät zum Empfang von Verkehrsinformationen kann es sich zum einen um ein Autoradio mit RDS/TMC Empfangsteil handeln, so daß die von den Rundfunkstationen im Hintergrund zum laufenden Programm übertragenen Verkehrsinformationen empfangen und direkt zur Weiterverarbeitung an das Navigationssystem weitergeleitet werden können. Alternativ kann es sich auch um ein Mobilfunkgerät handeln, das mit dem Navigationssystem verbunden ist. Auch von Mobilfunkanbietern werden Verkehrsinformationen zur Verfügung gestellt, die von dem Mobilfunkgerät an das Navigationssystem zur Weiterverarbeitung weitergeleitet werden. Gerade im letzteren Fall wird wiederum eine kabellose Verbindung zwischen dem Mobilfunkgerät und dem Navigationsgerät bevorzugt. Insbesondere kann es sich dabei um eine Kurzstreckenfunkverbindung nach dem Bluetooth-Verfahren handeln.

Die Erfindung wird nachfolgend anhand eines Ausführungsbeispieles und der Zeichnung näher erläutert. Es zeigen:
- Figur 1: ein erfindungsgemäßes Navigationssystem,
- Figur 2: eine schematische Landkartendarstellung,
- Figur 3: ein Ablaufdiagramm eines Verfahrens zur Auswahl einer CD-ROM.

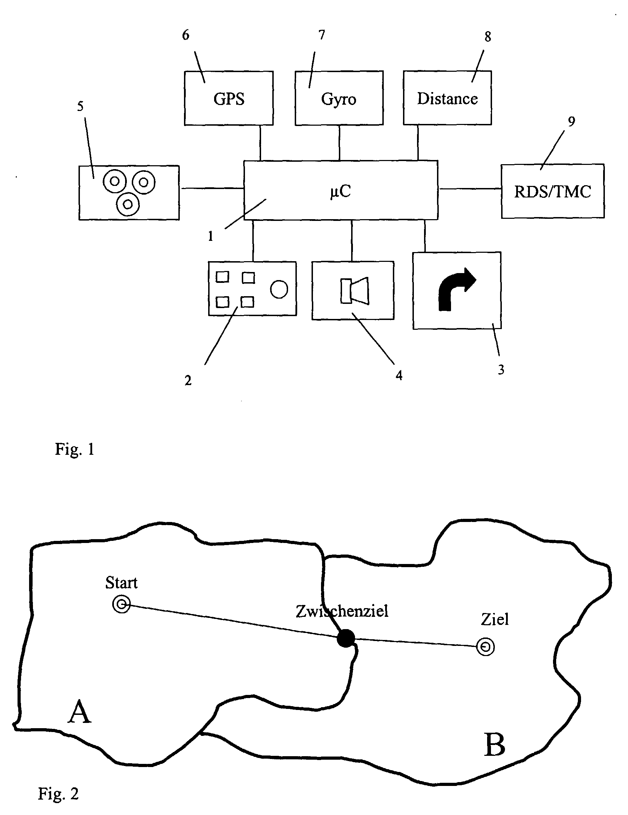

In Figur 1 sind die Komponenten eines Navigationssystems für Kraftfahrzeuge schematisch dargestellt. Zentraler Bestandteil des Navigationssystems ist die Recheneinheit 1, die auch die erforderlichen Speicherelemente enthält. In der Recheneinheit 1 laufen die Programme zur Routenplanung und zur Ausgabe von Zielführungsinformationen ab. Weiterhin werden von der Recheneinheit 1 aus mehrere Peripherieeinheiten angesteuert. Mit der Recheneinheit 1 ist eine Bedieneinheit 2 verbunden, über die bspw. der Zielort eingegeben oder ausgewählt werden kann. Die Bedieneinheit 2 kann im gleichen Gehäuse wie die Recheneinheit 1 untergebracht sein, jedoch kann die Bedieneinheit 2 auch als Fernbedienung ausgebildet sein, die mit der Recheneinheit 1 bspw. über eine optische Schnittstelle oder eine Funkschnittstelle in Verbindung steht. Mit der Recheneinheit 1 ist eine optische Ausgabeeinheit 3 verbunden, über die Zielführungsinformationen und sonstige Informationen ausgegeben werden. Die Zielführungsinformationen können weiterhin über einen Lautsprecher 4 akustisch ausgegeben werden. Die Recheneinheit 1 ist ferner mit einem Lesegerät 5 verbunden, in das Datenträger mit Landkartendaten eingelegt werden können. Erfindungsgemäß handelt es sich bei dem Lesegerät 5 um einen CD-Wechsler, in den mehrere CD-ROMs eingelegt werden können, die Landkartendaten zu unterschiedlichen geographischen Gebieten enthalten. Das Lesegerät 5 wird von der Recheneinheit 1 direkt angesteuert. Anhand der Landkartendaten kann von der Recheneinheit 1 bei bekanntem Start- und Zielort in bekannter Weise eine Berechnung der optimalen Route durchgeführt werden, die dann über die optische Ausgabeeinheit 3 ausgegeben werden kann.

Zur Bestimmung der aktuellen Fahrzeugposition enthält das Navigationssystem ferner einen Empfänger 6 zum Empfang von Satelliten-Navigationssignalen. Um eine von Satelliten unabhängige Positionsbestimmung durchführen zu können, enthält das Navigationssystem ferner einen Richtungssensor 7 und einen Wegsensor 8, die ebenfalls mit der Recheneinheit 1 verbunden sind. Somit ist mit Hilfe eines geeigneten Computerprogrammes unter Verwendung dieser Signale eine Positionsbestimmung möglich. Das in der Recheneinheit 1 ablaufende Computerprogramm ist nun so ausgelegt, daß abhängig von der aktuell ermittelten Fahrzeugposition geprüft wird, welcher der im Laufwerk 5 eingelegten Datenträger die gegenwärtige geographische Fahrzeugposition enthält. Der Datenträger, der die gegenwärtige Fahrzeugposition enthält, wird ausgewählt und anhand der darauf abgespeicherten Landkartendaten wird eine Routenberechnung durchgeführt. Ferner werden auf der Routenberechnung beruhende Zielführungsinformationen ausgegeben. Wird anhand der bestimmten Fahrzeugposition festgestellt, daß die geographische Grenze des auf dem aktuellen Datenträger abgespeicherten geographischen Bereichs erreicht wird, so wird bei den anderen vorhandenen Datenträgern geprüft, ob diese die gegenwärtige Fahrzeugposition enthalten. Somit kann stets die CD-ROM ausgewählt werden, die die Landkartendaten zu der aktuellen Fahrzeugposition enthält.

In dem in Figur 1 dargestellten Ausführungsbeispiel ist die Recheneinheit 1 zusätzlich mit einem Rundfunkempfänger 9 verbunden, der zum Empfang von RDS/TMC Signalen ausgebildet ist. Somit können empfangene Verkehrsinformationen vom Rundfunkempfänger 9 an die Recheneinheit 1 weitergeleitet und zur Berücksichtigung bei der Routenberechnung herangezogen werden.

Zur näheren Erläuterung ist in Figur 2 eine Landkarte schematisch dargestellt. Die Landkarte zeigt die Länder A und B, die jeweils abgeschlossene geographische Gebiete darstellen. Die Landkartendaten des Landes A und des Landes B sind jeweils vollständig auf unterschiedlichen CD-ROMs abgespeichert. Bei einer Fahrt von einem im Land A gelegenen Startort zu einem im Land B gelegenen Zielort ist es daher erforderlich, daß die CD-ROM mit den Landkartendaten gewechselt wird. Dies kann bspw. am Zwischenziel erfolgen, das einen Grenzort zwischen den Ländern A und B darstellt. Bei dem erfindungsgemäßen Navigationssystem werden daher beide CD-ROMs in den CD-Wechsler eingelegt. Anhand der aktuellen Fahrzeugposition wird der Startort ermittelt und die CD-ROM ausgewählt, die den Startort enthält. Im dargestellten Beispiel ist dies die CD-ROM mit den Landkartendaten des Landes A. Es erfolgt nun zunächst eine Routenberechnung und Zielführung bis zum Zwischenziel. Das Erreichen des Zwischenziels wird von dem Navigationssystem aufgrund der ständigen Positionsbestimmung automatisch erkannt. Wird das Zwischenziel erreicht, so wird automatisch eine Abfrage durchgeführt, auf welcher CD-ROM die gegenwärtige Fahrzeugposition, die sich nunmehr im Land B befindet, vorhanden ist. Die entsprechende CD-ROM wird nunmehr ausgewählt und kann zur Routenberechnung und Zielführung herangezogen werden, ohne daß der Benutzer des Systems eingreifen muß. Um eine übergangslose Zielführung zu gewährleisten, ist es im Rahmen der Erfindung auch möglich, die CD-ROM bereits kurz vor Erreichen des Zwischenziels zu wechseln und die weitere Routenberechnung durchzuführen. Die noch verbleibenden Zielführungsinformationen für die verbleibende Fahrt im Land A werden dazu in einem Speicher abgelegt.

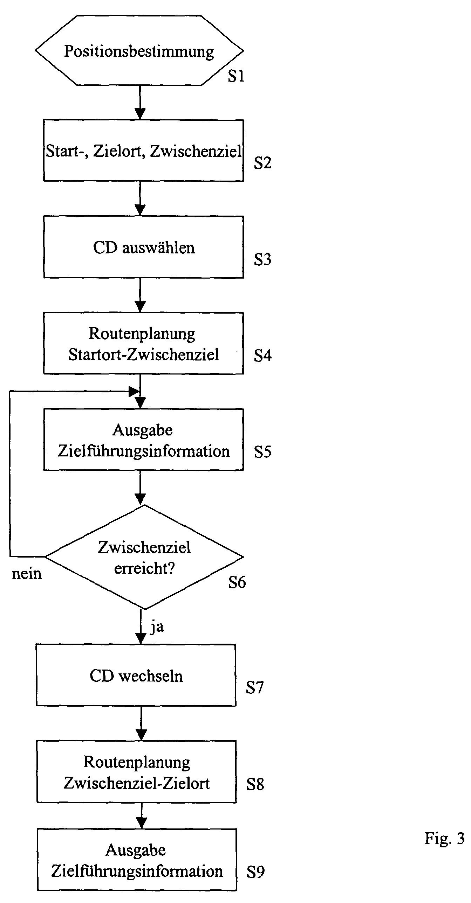

In Figur 3 ist ein einfacher Verfahrensablauf dargestellt, aus dem die Auswahl der jeweils erforderlichen CD-ROM ersichtlich ist. In Schritt S1 wird zunächst die Fahrzeugposition bestimmt. Diese wird auch nachfolgend laufend parallel zu den sonstigen Verfahrensschritten ermittelt. In Schritt S2 wird der Startort und der Zielort sowie das Zwischenziel, an dem ein Grenzübertritt erfolgen soll, eingegeben. Anstelle der Eingabe des Startortes kann auch die aktuelle Fahrzeugposition automatisch als Startort gewählt werden, sofern sie vorhanden ist. Anschließend erfolgt in Schritt S3 die Auswahl der CD-ROM, die die augenblickliche Fahrzeugposition, und somit den Startort, enthält. In Schritt S4 wird dann eine Routenplanung zwischen dem Startort und dem Zwischenziel vorgenommen. In Schritt S5 erfolgt anschließend die Ausgabe von Zielführungsinformationen. Dies erfolgt solange, bis das Zwischenziel erreicht wird. Das Erreichen des Zwischenziels wird dabei durch ständige Auswertung der aktuellen Fahrzeugposition detektiert. Ist das Zwischenziel erreicht, so wird die CD-ROM gewechselt (Schritt S7) und zwar wird nunmehr die CD-ROM ausgewählt, die den gegenwärtigen Standort des Fahrzeuges enthält. Anhand der Landkartendaten dieser CD-ROM erfolgt nunmehr die Routenplanung zwischen dem Zwischenziel und dem Zielort (S8), so daß anschließend in Schritt S9 wieder die entsprechenden Zielführungsinformationen ausgeben werden können.

Das Verfahren wurde anhand eines einfachen Beispiels erläutert, bei dem eine Fahrt in ein benachbartes Land angenommen wurde. Müssen bei der Fahrt vom Startort zum Zielort mehrere Länder durchquert werden, so kann das Verfahren einfach dadurch abgeändert werden, daß mehrere Zwischenziele eingegeben werden. Zudem ist in einer komfortableren Ausgestaltung der Erfindung vorgesehen, daß die Zwischenziele automatisch bei bekanntem Start- und Zielort durch das Programm zur Routenberechnung bestimmt werden.

## Patentansprüche

1. Navigationssystem eines Kraftfahrzeugs mit einer Recheneinheit (1) zur Berechnung einer Route zwischen einem Start- und einem Zielort, einem mit der Recheneinheit (1) verbundenen Lesegerät (5) zum Auslesen von Landkartendaten aus einem Datenträger, Mitteln (6, 7, 8) zur Bestimmung der Fahrzeugposition, einer mit der Recheneinheit (1) verbundenen Eingabeeinheit (2) und einer mit der Recheneinheit (1) verbundenen Ausgabeeinheit (3, 4), **dadurch gekennzeichnet**, daß das Lesegerät (5) zur Aufnahme von mehreren wechselbaren Datenträgern sowie zum wahlweisen Auslesen von Daten aus einem der Datenträger ausgebildet ist und das Navigationssystem Mittel zur Auswahl eines Datenträgers abhängig von der Fahrzeugposition enthält.

2. Navigationssystem nach Anspruch 1, **dadurch gekennzeichnet**, daß es sich bei den Datenträgern um CD-ROMs handelt und das Lesegerät (5) als CD-Wechsler ausgebildet ist.

3. Navigationssystem nach Anspruch 1 oder 2, **dadurch gekennzeichnet**, daß das Navigationssystem zur Routenberechnung über mindestens zwei Datenbanken ausgelegt ist, die auf verschiedenen Datenträgern abgelegt sind.

4. Navigationssystem nach einem der vorhergehenden Ansprüche, **dadurch gekennzeichnet**, daß das Lesegerät (5) über eine Funkschnittstelle mit der Recheneinheit (1) verbunden ist.

5. Navigationssystem nach einem der vorhergehenden Ansprüche, **dadurch gekennzeichnet**, daß es eine akustische und / oder optische Ausgabeeinheit aufweist.

6. Navigationssystem nach einem der vorhergehenden Ansprüche, **dadurch gekennzeichnet**, daß es eine Spracheingabeeinheit aufweist.

7. Navigationssystem nach einem der vorhergehenden Ansprüche, **dadurch gekennzeichnet**, daß es mit einem Gerät zum Empfang von Verkehrsinformationen verbunden ist oder ein solches enthält und die Verkehrsinformationen bei der Zielführung berücksichtigt werden.

8. Navigationssystem nach Anspruch 7, **dadurch gekennzeichnet**, daß es sich bei dem Gerät zum Empfang von Verkehrsinformationen um ein Autoradio handelt.

9. Navigationssystem nach Anspruch 7, **dadurch gekennzeichnet**, daß es sich bei dem Gerät zum Empfang von Verkehrsinformationen um ein Mobilfunkgerät handelt.
